# EUROPEAN PATENT APPLICATION

(11) **EP 4 734 266 A1**
(43) Date of publication of application: **29.04.2026**
(21) Application number: 24880180.5
(22) Date of filing: 18.10.2024
(51) Int. Cl.: H01M 50/528, G01B 21/16

(54) **ELECTRODE TAB GUIDE DEVICE**

(30) Priority: 20.10.2023 KR 20230141014
(71) Applicant: LG Energy Solution, Ltd., Seoul 07335 (KR)
(72) Inventor: LEE, Gi Taek, Daejeon 34122 (KR); RA, Young Min, Daejeon 34122 (KR); YOON, Seog Jin, Daejeon 34122 (KR); KOO, Bon Won, Daejeon 34122 (KR); HONG, Seok In, Daejeon 34122 (KR)
(74) Representative: Goddar, Heinz J.
(86) International application number: PCT/KR2024/015869
(87) International publication number: WO 2025/084843

(57) **Abstract**

The present invention relates to an electrode tab guide device, and more specifically, relates to an electrode tab guide device capable of effectively measuring and managing a gap of a tab guide to prevent disconnection of an electrode tab.

According to one example of the present invention, an electrode tab guide device pressurizing and gathering multiple electrode tabs, which are spaced apart from each other vertically and protruded from an electrode assembly, may be provided, wherein the electrode tab guide device comprises: an upper guide descending toward the electrode tabs from an upper portion to pressurize the electrode tabs; a lower guide ascending toward the electrode tabs from a lower portion to pressurize the electrode tabs while having a tab guide gap between the low er guide and the upper guide; a detection member moving in conjunction with the lower guide; and a sensor positioned above the upper guide and sensing a distance from the detection member to determine whether the tab guide gap is appropriate.

## Description

### Technical Field

The present invention relates to an electrode tab guide device, and more specifically, relates to an electrode tab guide device capable of effectively measuring and managing a gap of a tab guide to prevent disconnection of an electrode tab.

### Background Art

Secondary batteries capable of charging and discharging have recently been widely used in various devices. Secondary batteries attract attention as an eco-friendly energy source capable of reducing air pollution, and the like, especially from existing vehicles, and the like, using fossil fuels.

Secondary batteries can be classified into lithium-ion batteries, lithium-ion polymer batteries, and the like, depending on constitutions of electrodes and electrolytes, and can be classified into rectangular batteries, pouch-type batteries, and cylindrical batteries, and the like, depending on shapes of battery cases.

An electrode assembly built into the battery case has a structure consisting of a positive electrode, a negative electrode, and a separator interposed between the positive electrode and the negative electrode, which can be referred to as a power generation element capable of charging and discharging. The electrode assembly can be classified into a jelly roll type in which the separator is interposed between long sheet-shaped positive and negative electrodes coated with active materials, and a stack type in which multiple positive and negative electrodes are sequentially stacked in a state where the separators are interposed.

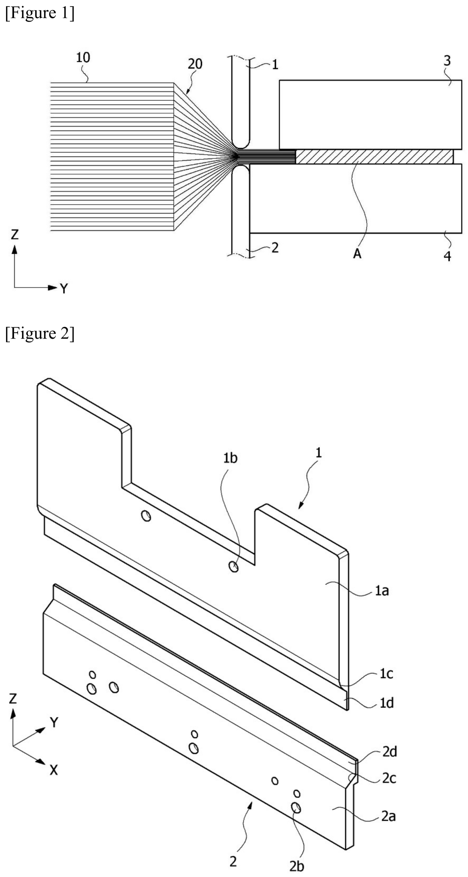

Figure 1 illustrates an electrode tab guide device including a conventional electrode tab guide.

The electrode assembly (10) is manufactured by assembling and welding electrode tabs (20) provided at each end of a plurality of electrodes and connecting them to electrode leads. The positive electrode tabs and negative electrode tabs are separated from each other and connected to the positive and negative electrode leads, respectively.

Before the electrode tabs are welded to the electrode leads, a pre-welding process is first performed. The pre-welding process can be defined as a process in which the electrode tabs are assembled and the electrode tabs (20) are welded by applying ultrasonic vibrations using a horn (3) and an anvil (4). Thereafter, the electrode leads are welded to the lower or upper portion of a welding portion (A) where the electrode tabs (20) are welded, whereby the electrode assembly can be manufactured. The tab guide process and the pre-welding process can be performed through a single device, and such a device can be called an electrode tab guide device.

If the electrode tabs are not sufficiently gathered in the pre-welding process, disconnection may occur in the electrode tabs of an outer shell portion due to vibrations caused by ultrasonic fusion.

The electrode tabs are positioned between an upper guide (1) and a lower guide (2) which move up and down, and then gathered while the gap between the upper guide (1) and the lower guide (2) is narrowed. The upper guide and the lower guide can be called tab guides.

Figure 2 illustrates one example of conventional electrode tab guides, that is, an upper guide (1) and a lower guide (2).

The upper guide (1) is formed in a flat plate shape wholly, which may comprise a main body (1a) mounted on an elevating device (not shown), and fastening holes (1b) formed in the main body (1a). A transition surface (1c) may be formed on the lower portion of the main body (1a), and a tab blade (1d) may be formed at the end of the transition surface (1c). The tab blade (1d) may be a constitution in which the electrode tabs are pressurized from the top to the bottom, and the transition surface (1c) may be provided to alleviate rapid bending of the electrode tabs located at the upside outer shell portion.

The lower guide (2) is formed in a flat plate shape wholly, which may comprise a main body (2a) mounted on an elevating device (not shown), and fastening holes (2b) formed in the main body (2a). A transition surface (2c) may be formed at the upper portion of the main body (2a), and a tab blade (2d) may be formed at the end of the transition surface (2c). The tab blade (2d) may be a constitution in which the electrode tabs are pressurized from the bottom to the top, and the transition surface (2c) may be provided to alleviate rapid bending of the electrode tabs located at the downside outer shell portion.

For the electrode tab guide, the upper guide (1) moves downward and the lower guide (2) moves upward. In this instance, the gap (tab guide gap) between the upper guide (1) and the lower guide (2) is reduced. That is, as the tab guide gap is reduced, the electrode tab guide is performed.

However, the conventional electrode tab guide device performed only sensing for elevating movements of the upper guide (1) and the lower guide (2) and did not optimally manage the tab guide gap. That is, it is common to adjust the tab guide gap afterward and manually.

If the tab guide gap upon completion of the tab guide is too narrow or too large, electrode tab disconnection and fusion failure may occur due to guide defects for the electrode tabs. Therefore, when such defects occur, it is common to readjust the tab guide gap by adjusting an elevating displacement of the upper guide (1) and the lower guide (2) afterward.

Therefore, it is necessary to devise a method capable of preventing electrode tab disconnection and fusion failure in advance by actively managing the tab guide gap.

### Disclosure

### Technical Problem

The present invention is intended to solve the problems of the conventional electrode tab guide device.

Through one example of the present invention, it is intended to provide an electrode tab guide device capable of preventing an error from occurring in advance with a preset tab guide gap by sensing an actual tab guide gap.

Through one example of the present invention, it is intended to provide an electrode tab guide device capable of easily monitoring a tab guide gap while utilizing the basic constitutions of the conventional electrode tab guide device.

Through one example of the present invention, it is intended to provide an electrode tab guide device capable of measuring a tab guide gap even in a limited space by providing a lower guide, which is more stably movable up and down, and simultaneously forming a detection member in integral conjunction with the lower guide, thereby effectively managing a tab pressing amount.

### Technical Solution

In order to achieve the above-described objects, according to one example of the present invention, an electrode tab guide device pressurizing and gathering multiple electrode tabs, which are spaced apart from each other vertically and protruded from an electrode assembly, may be provided, wherein the electrode tab guide device comprises: an upper guide descending toward the electrode tabs from an upper portion to pressurize electrode tabs; a lower guide ascending toward the electrode tabs from a lower portion to pressurize electrode tabs while having a tab guide gap between the lower guide and the upper guide; a detection member moving in conjunction with the lower guide; and a sensor positioned above the upper guide and sensing a distance from the detection member to determine whether the tab guide gap is appropriate.

The upper guide and the lower guide may each move from a standby position to a working position to perform tab guiding. After the tab guiding is completed, the upper guide and the lower guide may each move from the working position to the standby position.

The tab guide gap is minimized at the working position, where the tab guide gap is preset and needs to be managed very precisely. To this end, the sensor may sense the tab guide gap at the working position.

The upper guide and the lower guide may each have a plate shape whose width is longer than its height to correspond to the width of the electrode tabs.

The upper guide and the lower guide may each comprise a main body, and a tab blade provided to directly pressurize the electrode tabs on a lower or upper portion of the main body.

It is preferable that the sensor is a laser displacement sensor including a sensor main body having a sensing surface provided with a light-transmitting part and a light-receiving part at a lower portion.

It is preferable that the detection member has a horizontal surface provided to face the sensing surface of the sensor. Accordingly, the sensor may be provided to sense a vertical distance between the light-receiving part and the horizontal surface.

It is preferable that the sensor is provided directly above the horizontal surface so that a projection domain of the light-transmitting part is included in or overlaps the horizontal surface. Particularly, it is preferable that the center of the light-transmitting part is projected onto the horizontal surface, whereby the overlapping domain is larger than the non-overlapping domain.

The light-receiving part may be positioned in the forward of the light-transmitting part, and the sensor may be provided so that a projection domain of the light-receiving part is out of the horizontal surface.

The detection member may be provided to further protrude forward from a front surface of the lower guide.

It is preferable that the detection member has the horizontal surface at the same height as an upper end of the tab blade of the lower guide.

The detection member may be formed integrally with the lower guide.

It is preferable that the detection member is provided on both sides of the lower guide, respectively, and the sensor is provided on both sides of the upper guide, respectively, to correspond to the detection member.

The electrode tabs of the introduced electrode assembly are positioned between the detection member and the detection member. Therefore, no constitution for interfering with sensing is positioned in the space between the sensor and the detection member.

The sensor may be mounted on the upper guide at a position higher than the lower end of the upper guide.

The electrode tab guide device may comprise a horizontal frame provided and fixed on a forward upper portion of the upper guide, and the sensor may be mounted on the horizontal frame.

A cylinder moving the upper guide up and down may be mounted on the rear surface of the horizontal frame, and the sensors may be mounted on both sides of the rear surface of the horizontal frame, respectively, through a sensor bracket.

The electrode tab guide device may comprise a lower frame, a horizontal base fixedly provided on the upper portion of the lower frame, and a vertical frame provided to extend vertically upward from the horizontal base, and the horizontal frame may be fixed to extend horizontally from the upper portion of the vertical frame toward the forward upper portion of the upper guide.

In order to achieve the above-described objects, according to one example of the present invention, an electrode tab guide device may be provided, which comprises: a lower frame; a horizontal base fixedly provided on an upper portion of the lower frame; a vertical frame provided to extend vertically upward from the horizontal base; an upper guide provided on the horizontal base and provided to descend from an upper portion toward electrode tabs, thereby pressurizing the electrode tabs; a lower guide provided on the horizontal base and provided to ascend from a lower portion toward the electrode tabs, thereby having a tab guide gap between the lower guide and the upper guide, and pressurizing the electrode tabs; a detection member moving in conjunction with the lower guide; a sensor positioned above the upper guide and sensing a distance from the detection member to determine whether the tab guide gap is appropriate; and a horizontal frame fixed to extend horizontally from an upper portion of the vertical frame toward a forward upper portion of the upper guide and provided so that the sensor is mounted directly above the detection member.

The sensor may always be fixed regardless of the operation of the upper guide and the lower guide for the electrode tab guide. Then, wires connected to the sensor may be fixed to the horizontal frame.

It is preferable that the sensor is mounted on both sides of a rear surface of the horizontal frame, respectively, through a sensor bracket, and left-right and front-back positions of the sensor are adjustable through the sensor bracket.

It is preferable that the detection member is provided to further protrude forward from a front surface of the lower guide, and has a horizontal surface facing a light-transmitting part of the sensor vertically at the same height as an upper end of the lower guide.

It is preferable that the detection member is formed integrally with the lower guide.

It is preferable that the detection member is formed in a block shape reinforcing rigidity of the lower guide at both ends of the lower guide, and the horizontal surface is formed on an uppermost surface of the block shape.

It is preferable that the detection member is formed over the entire vertical length at both ends of the lower guide, and the horizontal surface is located on the same line as an uppermost end of the lower guide.

### Advantageous Effects

Through one example of the present invention, it is possible to provide an electrode tab guide device capable of preventing an error from occurring in advance with a preset tab guide gap by sensing an actual tab guide gap.

Through one example of the present invention, it is possible to provide an electrode tab guide device capable of easily monitoring a tab guide gap while utilizing the basic constitutions of the conventional electrode tab guide device.

Through one example of the present invention, it is possible to provide an electrode tab guide device capable of measuring a tab guide gap even in a limited space by providing a lower guide, which is more stably movable up and down, and simultaneously forming a detection member in integral conjunction with the lower guide, thereby effectively managing a tab pressing amount.

### Description of Drawings

Figure 1 is a conceptual diagram of conventional tab guiding and pre-welding,
Figure 2 is a perspective diagram of conventional upper and lower guides,
Figure 3 is a perspective diagram of an upper guide and a lower guide of a guide device according to one example of the present invention,
Figure 4 illustrates a detection member, and projection domains of a light-transmitting part of a sensor, and a light-receiving part of a sensor in a guide device according to one example of the present invention,
Figure 5 illustrates a tab guide gap between the upper guide and the lower guide shown in Figure 3, and a relationship between a sensor focal length and a sensing position,
Figure 6 illustrates one example of a guide device according to one example of the present invention,
Figure 7 is a partially enlarged diagram of Figure 6,
Figure 8 is a perspective diagram illustrating mounting positions of an upper guide, a lower guide, and a sensor in a guide device according to another example of the present invention, and
Figure 9 illustrates a tab guide gap between the upper guide and the lower guide shown in Figure 8, and a relationship between a sensor focal length and a sensing position.

### Best Mode

Hereinafter, an electrode tab guide device according to one example of the present invention will be described in detail with reference to the attached drawings.

According to one example of the present invention, the electrode tab guide device may be identical to or like a conventional electrode tab guide device, but a sensor and a detection member capable of sensing a tab guide gap may be additionally provided.

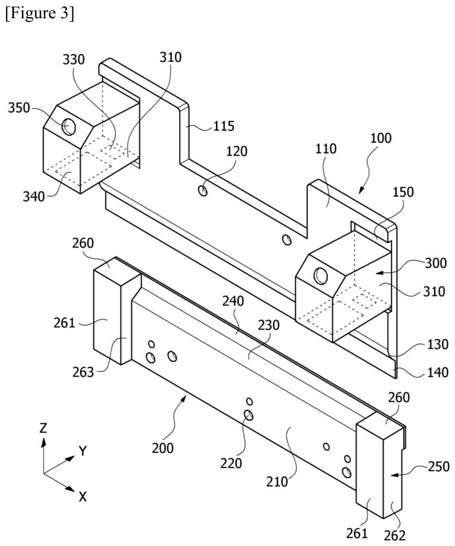

Figure 3 illustrates an upper guide (100), a lower guide (200), and a sensor (300), which are applicable to the present example.

As illustrated, the shape and size of the upper guide (100) applicable to the present example may be identical to or like the conventional upper guide. Similarly, the shape and size of the lower guide (200) applicable to the present example may be identical to or like the conventional lower guide. Therefore, the tab guide gap may be managed by minimizing changes in the detailed constitutions of the conventional electrode tab guide device.

Specifically, according to the present example, the upper guide (100) and the lower guide (200) are provided to be movable up and down, and the upper guide (100) descends and the lower guide (200) ascends for the tab guide. At this time, a descending displacement of the upper guide (100) and an ascending displacement of the lower guide (200) may be predetermined. Therefore, the gap between the upper guide (100) and the lower guide (200) for the tab guide, that is, the tab guide gap, may be optimally preset to suit the current electrode assembly.

When the tab guide is completed through the upper guide (100) and the lower guide (200), pre-welding may be performed. Thereafter, when the pre-welding is completed, the upper guide (100) ascends and the lower guide (200) descends. Thereafter, the electrode assembly, on which the tab guide and pre-welding are completed, is transferred to the next process. Then, a new electrode assembly may be transferred to the electrode tab guide device, and then the tab guide and pre-welding may be performed in the same order.

As described above, the upper guide (100) and the lower guide (200) may be repeatedly moved up and down, and vibrations may be transmitted to the upper guide (100) and the lower guide (200) upon ultrasonic fusion. Therefore, an error may occur in the optimally preset tab guide gap due to the repeated tab guide and pre-welding.

As shown in Figure 3, the upper guide (100) and the lower guide (200) may be formed long in the x-axis direction, that is, the width direction of the electrode assembly or the width direction of the electrode, and the tab guide gap may be set in the z-axis direction. Therefore, an error in the tab guide gap set in the elevating direction of the upper guide (100) and the lower guide (200) and a deviation in the tab guide gap on both sides of the tab guides (100, 200) may occur. In other words, the tab guide gap varies between the left and right ends in the x-axis direction, whereby there may be a problem that the electrode tabs are not guided uniformly as a whole. Such a problem may cause problems such as disconnection of the outermost shell electrode tab in the pre-welding process, and the tab guide gap must be reset afterward and manually, whereby it becomes difficult to perform an efficient automated process.

To solve such a problem, according to the present example, a detection member (250) may be provided. The detection member (250) may be provided to provide a basis for sensing the tab guide gap.

The detection member (250) may be provided to move in conjunction with the lower guide (200). Particularly, the detection member (250) may be provided to move integrally with the lower guide (200). Therefore, the detection member (250) may have the same elevation displacement as the elevation displacement of the lower guide (200).

Specifically, the lower guide (200) may comprise a main body (210) formed in a plate shape. A plurality of fastening holes (220) may be formed in the main body (210), and the main body (210) may be coupled with an elevating device (not shown) through the fastening holes (220).

A tab blade (240) may be provided on the upper portion of the main body (210), and the end of the tab blade (240) may directly pressurize the lower portion of the electrode tab. The thickness of the main body (210) is formed thicker than the thickness of the tab blade (240), whereby the main body (210) may be firmly coupled with the elevating device.

A transition surface (230) may be formed between the main body (210) and the tab blade (240). The main body (210) and the tab blade (240) may be formed in a plane shape, and as illustrated, the tab blade may be positioned at the upper rearward of the main body (210). Therefore, the transition surface (230) may be formed in a curved surface or inclined surface shape to connect the main body (210) and the tab blade (240). The transition surface (230) may be provided to gently bend the electrode tabs positioned at the lower portion from the center of the electrode assembly.

The detection member (250) may comprise a horizontal surface (260) formed at the same height as the upper end of the tab blade (240). The tab guide gap means a distance between the lower end of the tab blade (140) of the upper guide and the upper end of the tab blade (240) of the lower guide. Particularly, the tab guide gap at the working position needs to be set and managed very precisely. The horizontal surface (260) of the detection member (250) and the tab blade (240) are formed at the same height, whereby the horizontal surface (260) forms a single reference point or reference position for determining the tab guide gap. Particularly, as the detection member (250) is provided to move up and down integrally with the lower guide (200), no error or deviation occurs between the upper end of the tab blade (240) and the horizontal surface (260).

It is preferable that the detection member (250) is formed to have substantially the same height as that of the lower guide (200). That is, the detection member (250) may be provided to have a height that matches the height from the lower end of the main body (210) to the upper end of the tab blade (240).

The detection member (250) may be provided to protrude into the forward of the lower guide (200). The detection member (250) may be formed in a block shape, where the upper surface may be the above-described horizontal surface (260), and the front surface (261) may be positioned at the forward of the lower guide (200). That is, the front surface (261) may be positioned further forward than the front surface of the main body (210) of the lower guide (2 00).

In addition, the inside surface (263) of the detection member (250) may be connected to the main body (210) and the tab blade (240) of the lower guide (200).

The detection member (250) may be provided on both sides of the lower guide (200), respectively. When the detection member (250) is coupled or integrally formed with the lower guide (200), the detection member (250) and the lower guide (200) may be referred to as a lower guide module. Therefore, the front surface of the detection member (250) may form the frontmost surface of the lower guide module, and the outside surface (262) of the detection member (250) may form side surfaces of both side ends of the lower guide module. Then, both horizontal surfaces (260) of the detection member (250) and the upper end of the tab blade (240) therebetween may form the uppermost end surface of the lower guide module.

The shape of the detection member (250) can be regarded to be for stable mounting and stable elevating of the lower guide (200).

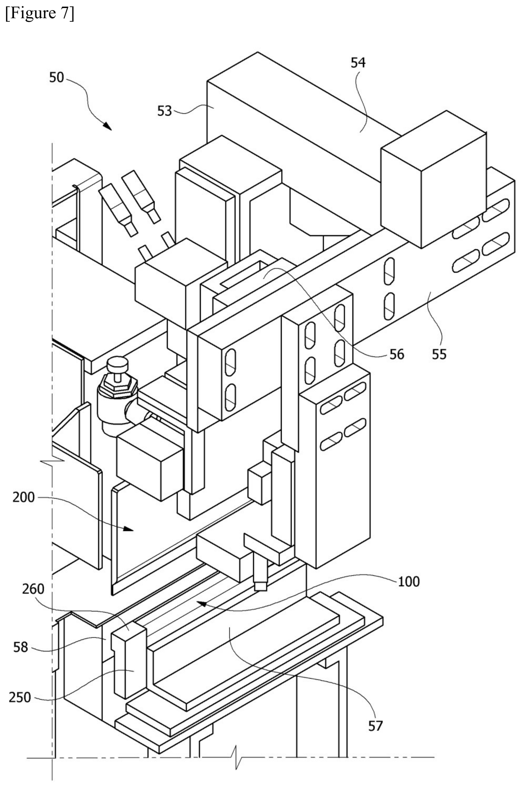

Referring to Figures 3 and 7, the lower guide (200) may be guided to move up and down through a forward guide (57) and a rearward guide (58). Particularly, the forward guide (57) may guide the inside surface of the detection member (250), and the rearward guide (58) may guide the outside surface of the detection member (250). Therefore, the lower guide (200) may move up and down very stably.

According to the present example, a sensor (300) located on the upper portion of the upper guide (100) and sensing a distance change with the detection member (250) may be provided. To measure the tab guide gap, the sensor may be provided to sense the distance change between the detection member (250) and the sensor (300).

As one example, as shown in Figure 3, the sensor (300) may be fixedly provided on the upper guide (100).

Specifically, the upper guide (100) may comprise a main body (110) formed in a plate shape. A plurality of fastening holes (120) may be formed on the main body (110), and the main body (110) may be coupled with an elevating device (not shown) through the fastening holes (120).

A tab blade (140) may be provided on the lower portion of the main body (110), and the end of the tab blade (140) may directly pressurize the upper portion of the electrode tab. The thickness of the main body (110) is formed thicker than the thickness of the tab blade (140), whereby the main body (110) may be firmly coupled with the elevating device.

A transition surface (130) may be formed between the main body (110) and the tab blade (140). The main body (110) and the tab blade (140) may be formed in a plane shape, and as illustrated, the tab blade may be positioned at the lower rearward of the main body (110). Therefore, the transition surface (130) may be formed in a curved surface or inclined surface shape to connect the main body (110) and the tab blade (140). The transition surface (130) may be provided to gently bend the electrode tabs positioned at the lower portion from the center of the electrode assembly.

A rectangle-shaped step portion (115) may be formed at the upper center of the main body (110). The step portion (115) may be formed in a rectangle-shaped recessed shape. This may be a structure for which the upper guide (100) is stably coupled with the elevating device and stably moved up and down.

A sensor (300) may be mounted on the front surface of the main body (110).

The sensor (300) may comprise a sensor body (310), and the bottom surface (310) of the sensor body (310) may be provided to face the horizontal surface (260) of the detection member (250).

The sensor (300) may be fixedly mounted on the upper guide (100) through the rear surface of the sensor body (310). The sensor (300) may be mounted in a form protruding forward from the upper guide (100). Then, the front upper portion of the sensor body (310) may be connected to a wire through a wire connection portion (350) for power supply and data communication.

A light-transmitting part (330) and a light-receiving part (340) may be provided on the bottom surface (310). The light-transmitting part (330) is a constitution to transmit a laser onto a measurement target, and the light-receiving part (340) is a constitution to receive the laser reflected from the measurement target. Through this, the displacement between the light-receiving part (340) and the measurement target may be measured.

It is preferable that the light-transmitting part (330) and the light-receiving part (340) are provided parallel to the bottom surface (310), and a projection area of the light-receiving part (340) is larger than a projection area of the light-transmitting part (330). Then, it is preferable that the light-receiving part (340) is located at the forward of the light-transmitting part (330).

Here, the areas and projection domains of the light-transmitting part (330) and the horizontal surface (260) may be important for more accurate displacement measurement. Then, the protruding length of the lower guide (200), especially the protruding length of the detection member (250), may also be important.

First, as the forward protruding length of the sensor (300) in the front surface of the upper guide (100) increases, the forward protruding length of the detection member (250) in the front surface of the lower guide (200) should increase. The lower guide (200) is a constitution to move up and down, and the forward of the upper guide (100) and the lower guide (200) is a region where the electrode assembly moves. Specifically, a pallet on which the electrode assembly is seated and transported moves in the x-axis direction. Therefore, to exclude interference with the moving pallet, there is a certain limit to the increase in the protruding length of the detection member (250), i.e., the protruding length in the y-direction.

Therefore, according to the present example, it is preferable that a recessed portion (150) recessed to the rearward is formed in the main body (110) of the upper guide (100), and the sensor (300) is mounted in the recessed portion (150). That is, it is preferable that the rear surface of the sensor body (310) is inserted and mounted in the recessed portion (150). Through this, the protruding length of the sensor (300) may be reduced. In other words, by reducing the protruding length of the sensor, the protruding length of the detection member may be reduced.

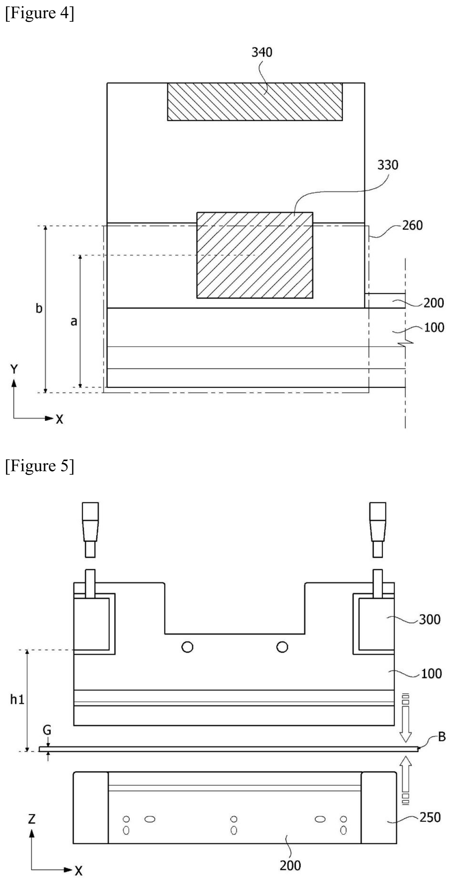

Figure 4 illustrates a horizontal surface (260), and projection domains of a light-transmitting part (330) and a light-receiving part (340) in a vertical direction.

It is preferable that the projection domain of the light-transmitting part (330) to the horizontal surface (260) is included in or partially overlaps the horizontal surface (260). Of course, it is preferable that the center position of the light-transmitting part (330) is located at the inner domain of the horizontal surface (260).

It is preferable that the front-back width (b, y-direction width) of the horizontal surface (260) is larger than the center distance (a) of the projection domain. Here, the center distance (a) of the projection domain is a fixed value in the already-manufactured sensor (300). However, it may vary depending on the reference line of the center distance (a), that is, the rear surface position of the sensor (300). As described above, there is a limit to the increase in the b value. Therefore, it is preferable that the value a has a relatively small value. To this end, the sensor (300) may be recessed and mounted in the recessed portion (150), and through this, the value a may be made smaller than the value b.

Meanwhile, it is preferable that the projection domain of the light receiving part (340) is located forward, away from the horizontal surface (260).

Figure 5 illustrates positions of an upper guide (100), a lower guide (200), and a sensor (300) based on a working position (B) where tab guide is performed.

An elevating distance of the upper guide (100) may be set to, for example, approximately 15mm, and similarly, the elevating distance of the lower guide (200) may be set to, for example, approximately 15mm. The upper guide (100) may descend approximately 15mm from the standby position to reach the working position, and the lower guide (200) may ascend approximately 15mm from the standby position to reach the working position. The tab guide gap (G) at the working position may be preset, and may be set to 0.5mm as one example. Of course, the tab guide gap (G) may be further increased depending on the thickness increase of the electrode assembly.

According to the present example, the vertical distance (h1) between the sensor (300) and the working position (B) of the lower guide may be determined and fixed by the mounting of the sensor. Of course, the vertical distance between the sensor (300) and the working position (B) of the upper guide may also be determined and fixed. The sensor measurement range may be set within an error of approximately 20% based on the vertical distance (h1).

As one example, when h1 is 50mm and G is 0.5mm, the distance from the sensor (300) to the horizontal surface (260) may be measured as 50.0mm. In this case, it may be confirmed that the electrode tab guide is currently performed at the correct tab guide gap through the sensor (300).

Meanwhile, according to the present example, the exact tab guide gap may be measured at the working position through h1, G, and the sensor measurement range. However, when the lower guide (200) is positioned at the standby position, the distance between the sensor (300) and the horizontal surface (260) may be outside the sensor measurement range. Therefore, there is a problem that it is difficult to secure data on the change in the tab guide gap between the standby position and the working position. However, very accurate tab guide gap data may be secured at the working position.

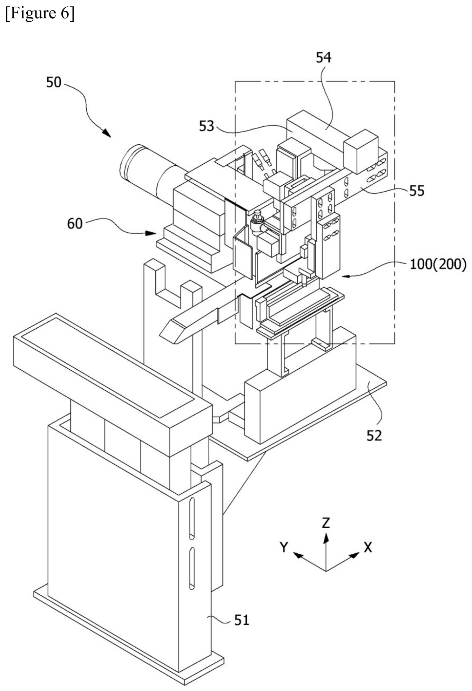

Figure 6 illustrates one example of an electrode tab guide device including the upper guide (100) and the lower guide (200) as described above. Figure 7 is a partial enlarged diagram of the electrode tab guide device.

The electrode tab guide device (50) may comprise a lower frame (51) and a horizontal base (52). The lower frame (51) may be regarded as a constitution to support the horizontal base (52) with respect to the ground, and the horizontal base (52) may be regarded as a constitution in which the constitution for electrode tab guide and the constitution for pre-welding are provided to be supported.

The upper guide (100) and the lower guide (200) may be provided at the forward of the horizontal base (52), and an ultrasonic fusion device (60) for performing the pre-welding may be provided at the rearward of the horizontal base (52).

The electrode assembly is transferred in the longitudinal direction of the upper guide (100) and the lower guide (200), that is, in the x-axis direction, and then fixed. Thereafter, the electrode tab guide and pre-welding are performed, and when the pre-welding is completed, it is additionally transferred in the x-axis direction again to be introduced to the next process.

Meanwhile, the upper guide (100) and the lower guide (200) are constitutions to move up and down, so that they are connected to separate elevating devices. The elevating device (not shown) for moving the lower guide (200) up and down may be mounted using the horizontal base (52), and thus may be mounted very stably.

On the contrary, it is not easy to mount the elevating device for moving the upper guide (100) up and down using the horizontal base (52). Therefore, in the present example, the elevating device of the upper guide (100) may be mounted using a vertical frame (53).

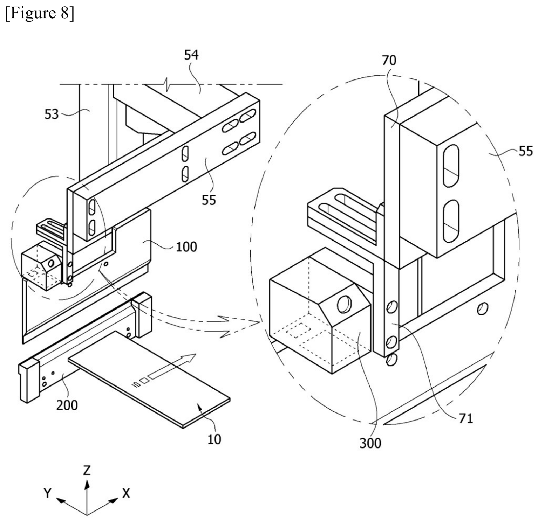

The vertical frame (53) may be provided by extending upward from one side of the horizontal frame (51). Particularly, the vertical frame may be provided to be skewed to a position where the electrode assembly (10, see Figure 8) is taken out. A vertical extension length of the vertical frame (53) may determine a mounting height of the elevating device (56) from the vertical upper portion of the upper guide (100).

The vertical frame (53) may be connected to an extension frame (54). The extension frame (54) may be provided to determine a mounting position of the elevating device (56), i.e., a front-back position. The extension frame (54) may be formed to extend forward from the upper portion of the vertical frame (53).

The extension frame (54) may be connected to a horizontal frame (55). The horizontal frame (55) is horizontally extended, and then positioned at the forward and the upper portion of the upper guide (100).

An elevating device (56) for moving the upper guide (100) up and down may be mounted on the rear surface of the horizontal frame (55). That is, the elevating device (56) should be fixed at the forward upper portion of the upper guide (100), and for this fixation, the vertical frame (53), the extension frame (54), and the horizontal frame (55) may be provided.

The horizontal frame (55) may be used for fixing and mounting the sensor (300).

Figure 8 illustrates an upper guide (100), a lower guide (200), a horizontal frame (55), and a sensor (300) mounted on the horizontal frame.

In the above-described example, the sensor (300) is mounted and fixed to the upper guide (100). Since the upper guide itself has an elevating structure, the sensor (300) also moves up and down in conjunction with the same. Therefore, the wire connected to the sensor (300) also moves, thereby causing a problem that it is not easy to fix the wire. In addition, the distance between the sensor (300) and the detection member (250) is relatively short, so that the sensor focal length range is narrowed. For this reason, there is a problem that it is difficult to measure the displacement distance in a state where the lower guide (200) is moved to the standby position. The reason is because it goes out of the focal length range, when the lower guide (200) is moved to the standby position.

In the present example, since the sensor (300) is fixedly mounted through the horizontal frame (55), the sensor (300) itself may be fixed. Through this, it is easy to fix the wire, and it is possible to expand the sensor focal length range.

As illustrated, at least one sensor bracket (70, 71) may be provided on one side of the horizontal frame (55). Specifically, the sensor bracket may comprise a vertical bracket (70) and a horizontal bracket (71).

The vertical bracket (70) may be provided to determine the mounting height of the sensor, and the horizontal bracket (71) may be provided to determine the left and right positions of the sensor. In addition, by adjusting the thickness of the vertical bracket (70) or the mounting position of the sensor relative to the horizontal bracket (71), the horizontal surface of the sensor may be positioned directly above the detection member. At this time, only the vertical distance between the sensor and the detection member may be changed, and the projection position may be the same as in Figure 4.

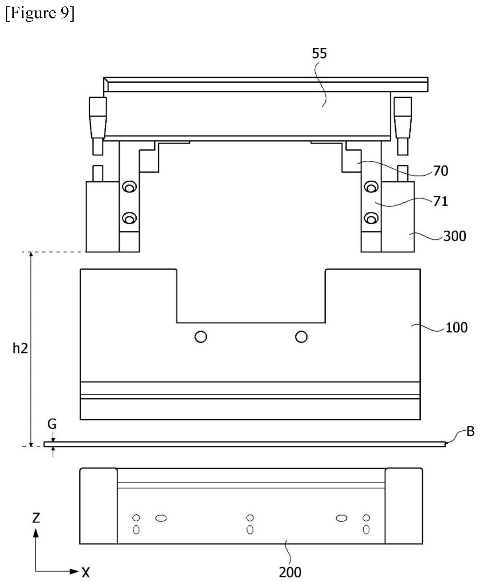

Figure 9 illustrates positions of an upper guide (100), a lower guide (200), and a sensor (300) based on a working position (B) where tab guide is performed. Unlike the above-described example, the sensor (300) is mounted and fixed separately from the upper guide (100), whereby its position may always be fixed.

The elevating distance of the upper guide (100) may be set to approximately 15mm as one example, and the elevating distance of the lower guide (200) may be set to approximately 15mm as one example. The upper guide (100) may descend approximately 15mm from the standby position to reach the working position, and the lower guide (200) can be raised approximately 15 mm from the standby position to reach the working position. The tab guide gap (G) at the working position may be preset, and may be set to 0.5mm as one example.

According to the present example, the vertical distance (h2) between the sensor (300) and the working position (B) of the lower guide may be determined and fixed by the mounting of the sensor. Of course, the vertical distance between the sensor (300) and the working position (B) of the upper guide may also be determined and fixed. The sensor measurement range may be set within an error of approximately 35% or so based on the vertical distance (h2).

As one example, when h2 is 100mm and G is 0.5mm, the distance from the sensor (300) to the horizontal surface (260) may be measured as 100.0mm. In this case, it can be confirmed that the electrode tab guide is currently performed with the accurate tab guide gap through the sensor (300).

Meanwhile, according to the present example, the accurate tab guide gap may be measured at the working position through h2, G, and the sensor measurement range. In addition, according to the present example, the sensor focal length may be set based on approximately 100mm. This means that the measurement range also increases due to the increase in the focal length.

Here, it can be known that when the elevating distance of the lower guide is approximately 15mm, the sensor (300) can measure the tab guide gap at the standby position as well as at the working position of the lower guide. Therefore, according to the present example, it is also possible to obtain data on the change in the tab guide gap between the working position and the standby position.

However, according to the present example, since the sensor is always fixed, it is difficult to confirm whether the upper guide (100) is misaligned.

The present inventors examined reliability of tab guide gap measurement through the sensor in the cases where the tab guide gaps were set to 0.5mm, 1.0mm, and 1.5mm in two different examples as described above.

In all cases, linearity of the laser displacement sensor could be confirmed, and the reference error was also measured to be 0.10 to 0.53 micrometers, whereby the reliability could be confirmed.

### Industrial Applicability

It is described in the Detailed Description of Invention.

## Claims

1. An electrode tab guide device pressurizing and gathering multiple electrode tabs, which are spaced apart from each other vertically and protruded from an electrode assembly, wherein the electrode tab guide device comprises:
an upper guide descending toward the electrode tabs from an upper portion to pressurize them;
a lower guide ascending toward the electrode tabs from a lower portion to pressurize t he electrode tabs while having a tab guide gap between the lower guide and the upper guide;
a detection member moving in conjunction with the lower guide; and
a sensor positioned above the upper guide and sensing a distance from the detection member to determine whether the tab guide gap is appropriate.

2. The electrode tab guide device according to claim 1, **characterized in that**
the upper guide and the lower guide each have a plate shape whose width is longer than its height to correspond to the width of the electrode tabs.

3. The electrode tab guide device according to claim 2, **characterized in that**
the upper guide and the lower guide each comprise a main body, and a tab blade provided to directly pressurize the electrode tabs on a lower or upper portion of the main body.

4. The electrode tab guide device according to claim 3, **characterized in that**
the sensor is a laser displacement sensor including a sensor main body having a sensing surface provided with a light-transmitting part and a light-receiving part at a lower portion.

5. The electrode tab guide device according to claim 4, **characterized in that**
the detection member has a horizontal surface provided to face the sensing surface of the sensor.

6. The electrode tab guide device according to claim 5, **characterized in that**
the sensor is provided directly above the horizontal surface so that a projection domain of the light-transmitting part is included in or overlaps the horizontal surface.

7. The electrode tab guide device according to claim 6, **characterized in that**
the light-receiving part is positioned in the forward of the light-transmitting part, and the sensor is provided so that a projection domain of the light-receiving part is out of the horizontal surface.

8. The electrode tab guide device according to claim 5, **characterized in that**
the detection member is provided to further protrude forward from a front surface of the lower guide.

9. The electrode tab guide device according to claim 8, **characterized in that**
the detection member has the horizontal surface at the same height as an upper end of the tab blade of the lower guide.

10. The electrode tab guide device according to claim 8, **characterized in that**
the detection member is formed integrally with the lower guide.

11. The electrode tab guide device according to claim 8, **characterized in that**
the detection member is provided on both sides of the lower guide, respectively, and the sensor is provided on both sides of the upper guide, respectively, to correspond to the detection member.

12. The electrode tab guide device according to claim 11, **characterized in that**
the sensor is mounted on the upper guide at a position higher than a lower end of the upper guide.

13. The electrode tab guide device according to claim 11, **characterized in that**
the electrode tab guide device comprises a horizontal frame provided and fixed on a forward upper portion of the upper guide, and the sensor is mounted on the horizontal frame.

14. The electrode tab guide device according to claim 13, **characterized in that**
a cylinder moving the upper guide up and down is mounted on a rear surface of the horizontal frame, and
the sensor is mounted on both sides of the rear surface of the horizontal frame, respectively, through a sensor bracket.

15. The electrode tab guide device according to claim 14, **characterized in that**
the electrode tab guide device comprises a lower frame, a horizontal base fixedly provided on an upper portion of the lower frame, and a vertical frame provided to extend vertically upward from the horizontal base, and the horizontal frame is fixed to extend horizontally from an upper portion of the vertical frame toward the forward upper portion of the upper guide.

16. An electrode tab guide device comprising:
a lower frame;
a horizontal base fixedly provided on an upper portion of the lower frame;
a vertical frame provided to extend vertically upward from the horizontal base;
an upper guide provided on the horizontal base and provided to descend from an upper portion toward electrode tabs, thereby pressurizing the electrode tabs;
a lower guide provided on the horizontal base and provided to ascend from a lower portion toward the electrode tabs, thereby having a tab guide gap between the lower guide and the upper guide, and pressurizing the electrode tabs;
a detection member moving in conjunction with the lower guide;
a sensor positioned above the upper guide and sensing a distance from the detection member to determine whether the tab guide gap is appropriate; and
a horizontal frame fixed to extend horizontally from an upper portion of the vertical frame toward a forward upper portion of the upper guide and provided so that the sensor is mounted directly above the detection member.

17. The electrode tab guide device according to claim 16, **characterized in that**
the sensor is mounted on both sides of a rear surface of the horizontal frame, respectively, through a sensor bracket, and left-right and front-back positions of the sensor are adjustable through the sensor bracket.

18. The electrode tab guide device according to claim 16, **characterized in that**
the detection member is provided to further protrude forward from a front surface of the lower guide, and has a horizontal surface facing a light-transmitting part of the sensor vertically at the same height as an upper end of the lower guide.

19. The electrode tab guide device according to claim 18, **characterized in that**
the detection member is formed integrally with the lower guide.

20. The electrode tab guide device according to claim 19, **characterized in that**
the detection member is formed in a block shape reinforcing rigidity of the lower guide at both ends of the lower guide, and the horizontal surface is formed on an uppermost surface of the block shape.
